# EUROPEAN PATENT APPLICATION

(11) **EP 0 955 560 A1**
(43) Date of publication of application: **10.11.1999**
(21) Application number: 98830275.8
(22) Date of filing: 07.05.1998
(51) Int. Cl.: G02C 1/00, G02C 1/04, G02C 1/08

(54) **A spectacle frame**

(71) Applicant: Sperotto, Andrea, 33080 San Quirino (Pordenone) (IT)
(72) Inventor: Sperotto, Andrea, 33080 San Quirino (Pordenone) (IT)
(74) Representative: De Nova, Roberto

(57) **Abstract**

A spectacle frame of the type comprising a central bridge (9) interconnecting the lenses (1, 2) and disposed in the region of the user's nose for which it has bearing elements (12, 13), the central bridge (9) being provided with fixing elements (7, 8) for connection to both lenses (1, 2) on their inner sides facing towards the user's nose, the frame also comprising two side fixing elements (10, 11) each fixed to the outer side of a respective lens and having a respective support (14, 15) for articulation to the arm (16, 17) for bearing on the user's ear, the fixing elements (7, 8) of the central bridge and the side fixing elements (10, 11) having respective plates (20) for bearing on the facing rims (3) of the lenses, and pieces of resilient wire or thread (5, 6) connecting the fixing elements (7, 8) of the central bridge to respective side fixing elements (10, 11), the pieces (5, 6) of resilient wire or thread extending around the rims (3) of the lenses in a peripheral groove formed within the thickness of each lens, fixing the lenses firmly to the elements. The plate (20) of each fixing element for bearing on the rim (3) of the respective lens has a pair of opposed flanges (21, 22) projecting from the bearing plate (20), fixed firmly thereto, and grasping the thickness of the lens (1, 2) so as to be fixed thereto, the plate (20) being extended longitudinally along the periphery of the lens by opposed portions (23, 24) the bearing surfaces of which are shaped so as to match the shape of the periphery of the lens in the specific region in which bearing takes place.

The means for anchoring the ends of each piece of resilient wire or thread (5, 6) comprise a head (5a, 6a) provided on the end of each piece of wire or thread to be anchored and having a diameter greater than the diameter of the wire or thread, a hole (25, 26) extending through the thickness of the respective one of the opposed portions (23, 24) of the bearing plate (20), as well as a lateral slot (29, 30) which renders the hole (25, 26) accessible from the edge (27, 28) of the portion of the plate, the width of the slot (29, 30) and the diameter of the hole (25, 26) being substantially equal to the diameter of the wire or thread but less than the diameter of the head (5a, 6a) on the end of the wire or thread to be anchored.

The frame also provides for one (21) of the flanges grasping the thickness of the lens to have a small screw (33) the longitudinal axis of which extends substantially perpendicular to the plane of the lens and the tip of which has a pad (34) of soft material.

## Description

The present invention relates to a spectacle frame of the type comprising a central bridge interconnecting the lenses and disposed in the region of the user's nose for which it has bearing elements, the central bridge being provided with fixing elements for connection to both lenses on their inner sides facing the user's nose, the frame also comprising two side fixing elements, each fixed to the outer side of a respective lens and having a respective support for the articulation of the arm for bearing on the user's ears, the fixing elements of the central bridge and the side fixing elements having respective plates for bearing on the facing rims of the lenses, and pieces of resilient wire or thread connecting the fixing elements of the central bridge to respective side fixing elements, the pieces of resilient wire or thread extending around at least the lower sides of the lenses in a peripheral groove formed within the thickness of each lens, fixing the lenses firmly to the elements.

Spectacle frames of the type described above are known in the art and are commonly used for the construction of light-weight spectacles.

These frames also offer considerable versatility since they enable spectacles to be produced regardless of the peripheral shape of the lenses since the lenses are fixed solely to the side elements carrying the arms for bearing on the ears and to the central bridge element, without any frame which has to reproduce the whole of the periphery of each lens, since the frame is replaced by the resilient wire or thread which is practically invisible and extends around the lenses, at least on the lower side, within a peripheral groove.

In spite of the undeniable advantages offered by this known type of spectacle frame, it nevertheless has some disadvantages inherent particularly in the way in which the lenses are fixed to the central bridge-like element and to the elements carrying the side arms.

According to the prior art, this fixing is achieved by means of screws which extend into holes formed in the lenses.

As is known, it is quite difficult to make holes in the lenses because, in order to achieve precise positioning of the elements to be connected, they have to be made with great accuracy and precision, requiring special tools and the use of highly skilled personnel.

Moreover, damage to the lenses and consequent rejects cannot be entirely prevented.

A further problem complained of in known frames of the type specified above relates to the methods of anchoring the resilient wire or thread, for example, thin piano wire or plastics, particularly nylon, thread, to the central and side elements fixed to the lenses.

According to the known technology currently in use, the wire or thread is anchored by the provision of pairs of holes in the plates by means of which the central bridge element and the side elements with the arms bear against the peripheries of the lenses.

The ends of the wire or thread are threaded through the pairs of holes in succession from the inside to the outside and vice versa; when the lens is fitted in the loop formed by the wire or thread, it thus remains clamped in position between the rim of the lens and the bearing plate, without being able to slip.

This known system for anchoring the wires or threads is difficult to implement, takes time, and is therefore expensive.

The object of the present invention is to prevent the problems encountered in known frames of the type specified above by proposing a system for fixing the central bridge element and the side elements to the respective peripheral regions of the lenses which is reliable, can be implemented quickly without risk of damage to the lenses, and can also be adapted to lens peripheries of any type.

Another object is also to achieve a quick and secure anchorage of the ends of the resilient wires or threads extending around the lenses.

These objects are achieved by the frame characterized in accordance with the following claims.

The invention will now be described in greater detail with reference to a preferred embodiment thereof, illustrated by way of non-limiting example in the appended drawings, in which:
Figure 1 is a perspective view of the frame according to the invention with a lens partially disconnected from one of the side fixing elements and from the resilient wires or threads,
Figure 2 shows, on an enlarged scale and in perspective, a fixing element with the ends of the resilient wires or threads partially disconnected from the plate for bearing on the rim of the lens,
Figure 3 shows the detail of Figure 2 from a different perspective view point,
Figure 4 is a partial cross-section of a side fixing element mounted on the lens.

With reference to the above-mentioned drawings, two generic spectacle lenses, the peripheries of which may be of any shape, are indicated 1 and 2.

A groove 4 is formed in the thickness of each lens, along the whole of the peripheral rim 3 and, once the lenses have been mounted, pieces 5 and 6 of resilient thread or wire, for example, nylon thread or piano wire, which extend around each lens, are fitted in the grooves.

These pieces of thread or wire connect fixing elements 7 and 8 of a central bridge 9 to side fixing elements 10 and 11.

The nose-pieces 12 and 13 for bearing on the nose are fixed to the central bridge 9 in conventional manner, and supports 14 and 15 for respective arms 16 and 17 for bearing on the user's ears, are connected to each of the side fixing elements 10 and 11.

The arms 16 and 17 are connected to the supports 14 and 15 by means of respective conventional hinges 18 and 19.

The fixing elements 7, 8, 10 and 11 can be removed from the lenses and are structurally identical.

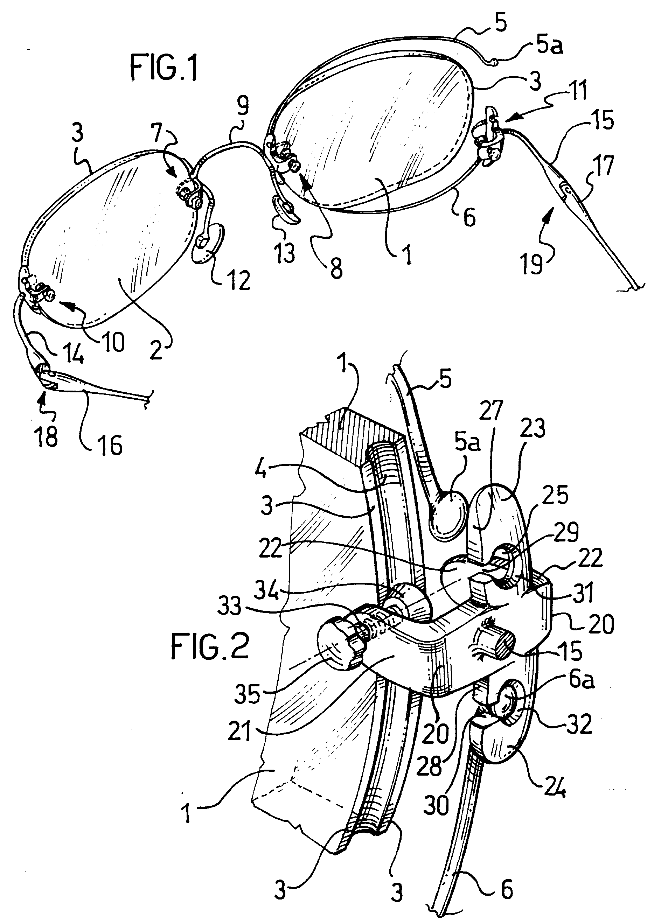

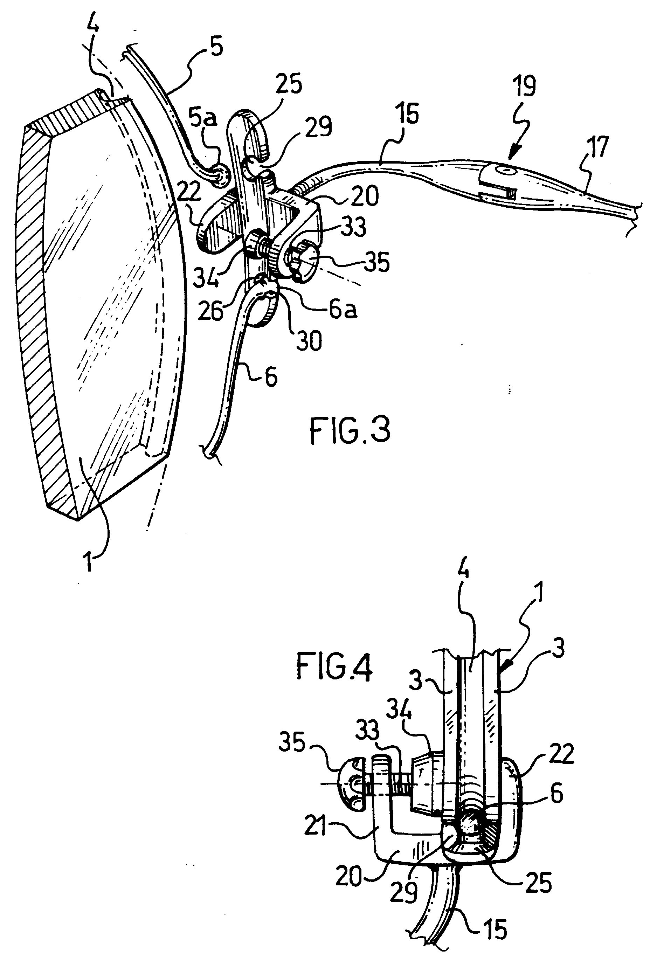

For this reason, only one of them will be described fully with reference to Figures 2, 3 and 4.

As can be seen from Figure 2, the fixing element 11 comprises a plate 20 shaped so as to match a portion of the rim 3 of the lens which, in the case described, is the lens 2 of the spectacles.

The plate 20 has a pair of flanges 21 and 22 for grasping the sides of the lens 2 for the purposes which will become clear from the following description.

The plate 20 also has two opposed portions 23 and 24 which extend along the rim 3 of the lens and are shaped so as to match the shape of the periphery of the lens in the specific region on which they bear.

Each portion 23 or 24 has a respective hole 25 or 26 connected to the lateral edge 27 or 28 by means of a respective slot 29 or 30.

The holes 25 and 26 advantageously have respective flares 31 and 32 facing outwardly relative to the plate 20 on the opposite side to the lens.

A small screw 33 is mounted on the flange 21 of the plate 20 and its tip which faces towards the lens 2 has a pad 34 of soft material.

The screw 33 also has an operating head 35.

According to a version with a simplified construction, not shown in the drawings, the flange 21 is formed so as to be resiliently flexible relative to the flange 22 so as to constitute a resiliently releasable clamp, thus avoiding the provision of the screw 33.

The free ends of the pieces of wire or thread 5 and 6 have enlarged heads, indicated 5a and 6a, respectively.

The diameters of these enlarged heads 5a and 6a are greater than the diameters of the holes 25 and 26, whereas the diameters of the portions of wire or thread 5 and 6 are slightly greater than or equal to the widths of the slots 29 and 30.

It can be seen from the foregoing description with reference to the drawings, that the frame according to the invention permits quick and secure mounting without danger of breakage of the lenses, regardless of the peripheral shape of the lenses.

The fixing elements 7, 8, 10 and 11 are fixed to the lenses either by resilient deformation of the flanges 21 and 22 of the bearing plate 20, in the simplified version with the resiliently releasable clamp or, with a greater degree of security and stability, by thorough tightening of the screw 33 by means of its head 35.

The pad 34 prevents the tip of the screw 33 from scratching the lens.

The pieces of wire or thread 5 and 6 are anchored by the insertion of their respective enlarged heads 5a and 6a in the holes 25 and 26 in the opposed portions 22 and 23 of the bearing plate 20.

This insertion is performed simply by passing the body of the wire or thread 5 and 6 through the slots 29 and 30, without the need to thread them through holes.

Once the enlarged heads 5a and 6a have been positioned, they are particularly stable in the flares 31 and 32 and any subsequent release is prevented because the plate 20 bears against the rim 3 of the lens consequently closing the portion of the groove 4 in the region of the engagement of the resilient wires or threads 5 and 6 which extend around the lens.

Any dismantling in order to replace a lens is also considerably facilitated by the frame according to the invention.

Although the invention has been described with reference to the preferred embodiment thereof, it may also be applied in a modified form in which the resilient wire or thread extending around the upper sides of the lenses 1 and 2 is replaced by a rigid frame portion known *per se*.

In this case, this frame portion should be understood as being connected, for example, by welding, to the upper portions 23 of the releasable fixing elements 7, 8 10 and 11 the structure of which, however, remains unchanged.

## Claims

1. A spectacle frame of the type comprising a central bridge (9) interconnecting the lenses (1, 2) and disposed in the region of the user's nose for which it has bearing elements (12, 13), the central bridge (9) being provided with fixing elements (7, 8) for connection to both lenses (1, 2) on their inner sides facing the user's nose, the frame also comprising two side fixing elements (10, 11) each fixed to the outer side of a respective lens and having a respective support (14, 15) for the articulation of the arm (16,17) for bearing on the user's ear, the fixing elements (7, 8) of the central bridge and the side fixing elements (10, 11) having respective plates (20) for bearing on the facing rims (3) of the lenses, and pieces of resilient wire or thread (5, 6) connecting the fixing elements (7, 8) of the central bridge to respective side fixing elements (10, 11), the pieces (5, 6) of resilient wire or thread extending around at least the lower sides of the lenses in a peripheral groove (4) formed within the thickness of each lens, fixing the lenses firmly to the elements, characterized in that the plate (20) of each fixing element for bearing on the rim (3) of the respective lens has a pair of opposed flanges (21, 22) projecting from the bearing plate (20), fixed firmly thereto, and grasping the thickness of the lens (1, 2) so as to be fixed thereto, the plate (20) being extended longitudinally along the periphery of the lens by opposed portions (23, 24), the bearing surfaces of which are shaped so as to match the shape of the periphery of the lens in the specific region in which bearing takes place.

2. A spectacle frame according to Claim 1, characterized in that the portion (23) of the opposed portions (23, 24) which extends towards the upper side of the lens (1, 2) is connected to a conventional piece of rigid frame extending solely along the upper side of the lens.

3. A spectacle frame according to Claim 1, characterized in that the opposed portions (23, 24) of the plate (20) for bearing on the rim (3) of the respective lens have respective means (25, 26, 29, 30) for anchoring an end of the resilient wire or thread (5, 6) extending around the lens (1,2 ).

4. A spectacle frame according to Claims 1 and 3, characterized in that the means for anchoring the ends of each piece of resilient wire or thread (5, 6) comprise a head (5a, 6a) provided on the end of each piece of wire or thread to be anchored and having a diameter greater than the diameter of the wire or thread, a hole (25, 26) extending through the thickness of the respective one of the opposed portions (23, 24) of the bearing plate (20), as well as a lateral slot (29, 30) which renders the hole (25, 26) accessible from the edge (27, 28) of the portion of the plate, the width of the slot (29, 30) and the diameter of the hole (25, 26) being substantially equal to the diameter of the wire or thread but less than the diameter of the head (5a, 6a) on the end of the wire or thread to be anchored.

5. A spectacle frame according to Claim 4, characterized in that the head disposed on the end of the wire to be anchored is constituted by an enlargement (5a, 6a) formed by deformation of the end of the wire or thread.

6. A spectacle frame according to Claims 1 to 5, characterized in that at least one (21) of the flanges fixed firmly to the plate (20) which bears on the rim (3) of the respective lens and grasps the thickness of the lens (1, 2) is resiliently flexible relative to the other.

7. A spectacle frame according to Claims 1 to 6, characterized in that one (21) of the flanges grasping the thickness of the lens has a small screw (33) the longitudinal axis of which extends substantially perpendicular to the plane of the lens.

8. A spectacle frame according to Claim 7, characterized in that the screw (33) has a pad (34) of soft material on its tip which is intended to bear against the surface of the lens (1, 2).
